# EUROPÄISCHE PATENTSCHRIFT

(11) **EP 3 234 402 B1**
(45) Veröffentlichungstag und Bekanntmachung des Hinweises auf die Patenterteilung: **25.09.2019**
(21) Anmeldenummer: 15808099.4
(22) Anmeldetag: 13.11.2015
(51) Int. Cl.: F16D 55/28, F16D 65/18, H02K 7/102, B60T 13/74, B60T 17/22, G01D 11/30

(54) **ELEKTROMAGNETISCH BETÄTIGBARE BREMSVORRICHTUNG**
BRAKE DEVICE THAT CAN BE ELECTROMAGNETICALLY ACTUATED
DISPOSITIF DE FREINAGE À COMMANDE ÉLECTROMAGNÉTIQUE

(30) Priorität: 16.12.2014 DE 102014018485
(43) Veröffentlichungstag der Anmeldung: 25.10.2017
(73) Patentinhaber: SEW-EURODRIVE GmbH & Co. KG, 76646 Bruchsal (DE)
(72) Erfinder: HUFNAGEL, Timo, 75031 Eppingen (DE); FICHTNER-PFLAUM, Gerolf, 76703 Kraichtal-Unteröwisheim (DE)
(86) Internationale Anmeldenummer: PCT/EP2015/002278
(87) Internationale Veröffentlichungsnummer: WO 2016/096070

(56) Entgegenhaltungen:
- DE-A1-102012 016 089
- DE-A1-102013 006 605
- DE-U1-202005 009 053

## Beschreibung

Die Erfindung betrifft eine elektromagnetisch betätigbare Bremsvorrichtung.

Es ist allgemein bekannt, dass Bremsvorrichtungen verschleißen.

Aus der DE 10 2012 016 089 A1 ist als nächstliegender Stand der Technik ein Sensorsystem zur Verschleißbestimmung einer elektromagnetisch betätigbaren Bremse mit Sensorsystem bekannt.

Aus der DE 20 2005 009 053 U1 ist eine Vorrichtung zur Überwachung einer elektromagnetisch betätigten Bremse bekannt.

Aus der DE 10 2013 006 605 A1 ist eine Bremsanordnung bekannt.

Der Erfindung liegt daher die Aufgabe zugrunde, die Sicherheit bei Bremsvorrichtungen in möglichst kompakter Weise zu erhöhen.

Erfindungsgemäß wird die Aufgabe bei der elektromagnetisch betätigbaren Bremsvorrichtung nach den in Anspruch 1 angegebenen Merkmalen gelöst.

Wichtige Merkmale der Erfindung bei der elektromagnetisch betätigbaren Bremsvorrichtung sind, dass sie aufweist:
- einen Spulenkörper, insbesondere des Elektromagneten,
- eine mit dem Spulenkörper drehfest verbundene, aber verschiebbare Ankerscheibe,
- einen Sensor mit Sensorgehäuse,
- ein Federteil und
- eine Kabelverschraubung,
**wobei** der Spulenkörper eine durchgehende gestuft ausgeführte Bohrung aufweist,
wobei das Sensorgehäuse des Sensors gestuft ausgeführt ist,
wobei die Kabelverschraubung an einem Ende der Bohrung angeordnet ist, insbesondere eingeschraubt ist in einen Gewindeabschnitt der Bohrung,
wobei das Federteil in der Bohrung angeordnet ist zwischen Kabelverschraubung und Sensorgehäuse,
wobei das Federteil einerseits an einer Stufe des Sensorgehäuses abgestützt ist und andererseits an der Kabelverschraubung abgestützt ist
wobei das Sensorgehäuse gegen eine Stufe der Bohrung angedrückt ist, insbesondere vom Federteil.

Von Vorteil ist dabei, dass der Sensor zur Funktions- und Verschleißüberwachung verwendbar ist und die Lösung kompakt ist, weil der Sensor samt Andrückvorrichtung in der Bremse integriert angeordnet ist. Vorzugsweise ist der Sensor als Wirbelstromsensor ausgeführt. Erfindungsgemäß wird der Sensor vom Federteil gegen eine Stufe der Bohrung angedrückt, wobei die Feder sich abstützt an einer Kabelverschraubung, durch welche das Sensorkabel herausgeführt ist und dabei diese Durchführung dicht ausgeführt ist. Die Kabelverschraubung verschließt außerdem die Bohrung dicht. Mittels des Sensors ist die Entfernung vom Sensor zur Ankerscheibe erfassbar, insbesondere bei Nichtbestromung der im Spulenkörper eingelegten Spule, welche bei Bestromung die Ankerscheibe zum Spulenkörper hin anzieht. Denn bei Nichtbestromung drücken Federelemente die Ankerscheibe vom Spulenkörper und somit Sensor weg bis auf Anschlag an einem Bremsbeläge tragenden Bremsbelagträger, der dabei auf ein eine Gegenbremsfläche aufweisendes Teil gedrückt wird.

Somit muss für den Einsatz des Sensors die Bremse nicht vergrößert werden und der Sensor ist innerhalb des geschützten Bremsgehäuses anordenbar.

Bei einer vorteilhaften Ausgestaltung weist die Bremsvorrichtung auf:
- einen zweiten Spulenkörper,
- eine mit dem zweiten Spulenkörper drehfest verbundene, aber verschiebbare zweite Ankerscheibe,
wobei der zweite Spulenkörper eine durchgehende Bohrung aufweist, wobei die beiden Bohrungen zueinander koaxial ausgerichtet sind, insbesondere also die beiden Bohrungen auf gleichem Radialabstand zu einer abzubremsenden Welle aufweisen und denselben Umfangswinkelbereich überdecken,
wobei die Bohrung im zweiten Spulenkörper gestuft ausgeführt ist,
wobei die Kabelverschraubung an dem vom zweiten Spulenkörper abgewandten Ende der Bohrung im ersten Spulenkörper angeordnet ist, insbesondere eingeschraubt ist in einen Gewindeabschnitt der Bohrung,
wobei das Federteil in der zweiten Bohrung angeordnet ist zwischenKabelverschraubung und Sensorgehäuse,
wobei das Federteil einerseits an einer Stufe des Sensorgehäuses abgestützt ist und andererseits an einer Hülse, welche an ihrem vom Federteil abgewandten Ende die Kabelverschraubung berührt.

Von Vorteil ist dabei, dass der Sensor bei einer Doppelbremse in einer zweiten Bremse anordenbar ist und die Kabelverschraubung in einer ersten Bremse anordenbar. Eine zwischen Federteil und dessen Abstützpunkt angeordnete Hülse verlängert den ausführbaren Abstand zwischen Kabelverschraubung und Sensor. Die Bohrung ist somit durch den ersten Spulenkörper, den zweiten Spulenkörper, die Ankerscheibe der ersten Bremse führbar.

Bei einer vorteilhaften Ausgestaltung überlappt der von der Hülse überdeckte axiale Bereich mit dem vom ersten und mit dem vom zweiten Spulenkörper überdeckten axialen Bereich. Von Vorteil ist dabei, dass eine hohe Entfernung realisierbar ist.

Bei einer vorteilhaften Ausgestaltung ragt die Hülse durch eine durchgehende Bohrung der ersten Ankerscheibe hindurch. Von Vorteil ist dabei, dass die Bremse kompakt ausführbar ist.

Bei einer vorteilhaften Ausgestaltung ist die Hülse auf einem größeren Radialabstand zur Achse der abzubremsenden Welle angeordnet als ein mit der abzubremsenden Welle drehfest aber axial verschiebbar verbundene Bremsbelagträger. Von Vorteil ist dabei, dass die Hülse innerhalb der Bremse angeordnet ist, insbesondere auch zumindest teilweise in einer oder mehreren Bohrungen angeordnet ist, und trotzdem den Bremsbelagträger nicht an der Drehbewegung hindert.

Bei einer vorteilhaften Ausgestaltung ist eine Abdeckung mit dem ersten und mit dem zweiten Spulenkörper verbunden, so dass der Zwischenbereich zwischen erstem und zweitem Spulenkörper gehäusebildend umgeben ist,
insbesondere wobei im Zwischenbereich die erste Ankerscheibe angeordnet ist. Von Vorteil ist dabei, dass der Innenraum der Bremse und somit auch der im Innenraum angeordnete Sensor gehäusebildend umgeben ist.

Bei einer vorteilhaften Ausgestaltung ist eine zweite Abdeckung mit dem zweiten Spulenkörper und dem eine Gegenbremsfläche aufweisenden Teil verbunden, so dass der Zwischenbereich zwischen dem Teil und dem zweiten Spulenkörper gehäusebildend umgeben ist,
insbesondere wobei im Zwischenbereich die zweite Ankerscheibe angeordnet ist. Von Vorteil ist dabei, dass auch der Innenraum der zweiten Bremse samt dem dort angeordneten Sensor gehäusebildend umgeben ist.

Bei einer vorteilhaften Ausgestaltung ist oder sind die erste und/oder die zweite Abdeckung aus elastischerem Material als die Spulenkörper ausgeführt, insbesondere aus Kunststoff oder Gummi. Von Vorteil ist dabei, dass eine kraftschlüssige Verbindung in hoher Schutzart herstellbar ist.

Bei einer vorteilhaften Ausgestaltung sind der Sensor und die Bohrung auf größerem Radialabstand von der Achse der abzubremsenden Welle angeordnet als eine Spule des Elektromagneten, insbesondere also der elektromagnetisch betätigbaren Bremsvorrichtung. Von Vorteil ist dabei, dass der Sensor in die Bremse integriert ist, aber keine Änderung an der Spule notwendig ist.

Bei einer vorteilhaften Ausgestaltung ist die Bohrung von der Ankerscheibe abdeckbar, insbesondere bei Anliegen der Ankerscheibe am Spulenkörper. Von Vorteil ist dabei, dass bei Bestromung der Spule die Ankerscheibe zum Spulenkörper und somit auch zum Sensor hingezogen wird. Somit wird die Bohrung dann von der Ankerscheibe abgedeckt, da sie größer ist als der Bohrungsquerschnitt.

Bei einer vorteilhaften Ausgestaltung überdeckt der von der Ankerscheibe überdeckte Umfangswinkelbereich den von der Bohrung überdeckten Umfangswinkelbereich und der von der Ankerscheibe überdeckte Radialabstandbereich überdeckt den von der Bohrung überdeckten Radialabstandbereich,

insbesondere wobei im Zwischenbereich zwischen Ankerscheibe und Sensor kein Teil angeordnet ist. Von Vorteil ist dabei, dass die Ankerscheibe die Bohrung abdeckt, wenn die Spule bestromt ist und somit die Ankerscheibe zum Spulenkörper hin gezogen wird.

Bei einer vorteilhaften Ausgestaltung ist ein Kabel vom Sensor mittig durch das Federteil und mittig durch die Kabelverschraubung geführt. Von Vorteil ist dabei, dass eine einfache Kabelführung ausführbar ist.

Bei einer vorteilhaften Ausgestaltung ist der Sensor ein Wirbelstromsensor, insbesondere zur Erfassung der Entfernung zwischen Ankerscheibe und Wirbelstromsensor. Von Vorteil ist dabei, dass eine sehr hohe Auflösung beider Erfassung der Position der Ankerscheibe erreichbar ist.

Weitere Vorteile ergeben sich aus den Unteransprüchen.

Die Erfindung wird nun anhand von Abbildungen näher erläutert:
In der Figur 1 ist eine erfindungsgemäße Bremsvorrichtung mit Sensor zur Verschleißerkennung in Schnittansicht gezeigt.
In der Figur 2 ist der Sensor mit zugehöriger Halteanordnung in Schrägansicht gezeigt.
In der Figur 3 ist eine alternative Bremsvorrichtung mit Sensor zur Verschleißerkennung in Schnittansicht gezeigt.
In der Figur 4 ist der zur Figur 3 gehörige Sensor mit zugehöriger Halteanordnung in Schrägansicht gezeigt.

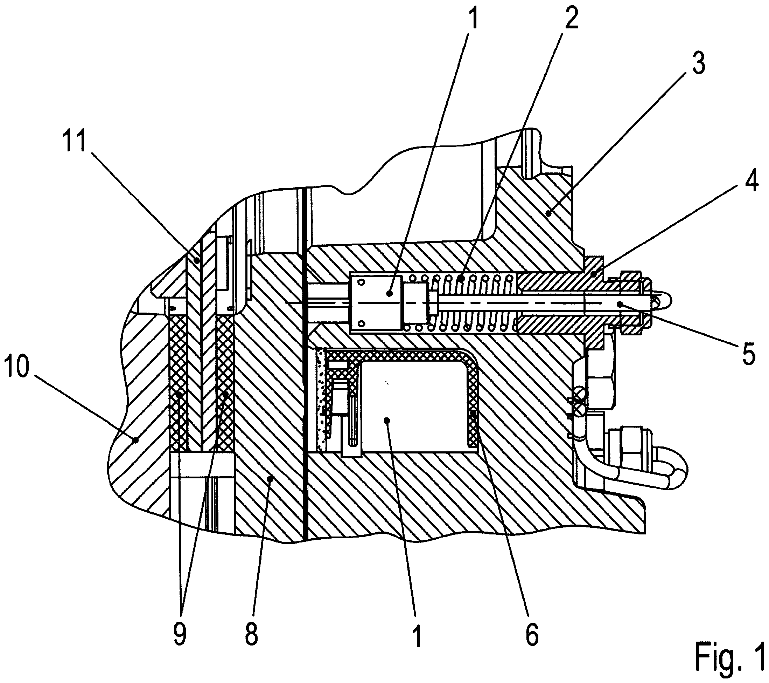

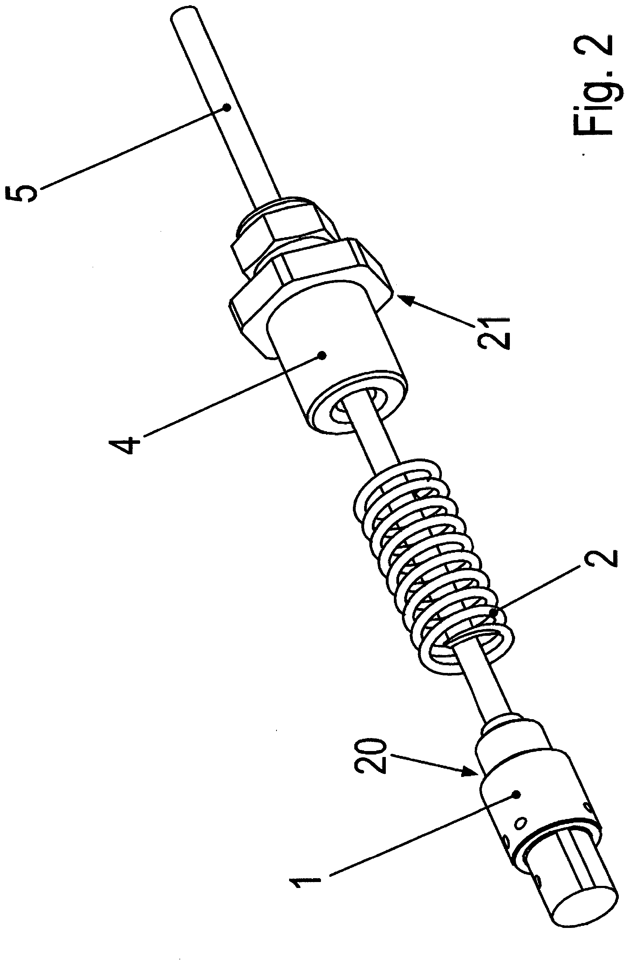

Wie in Figur 1 und Figur 2 gezeigt, ist eine erfindungsgemäße elektromagnetisch betätigbare Bremse gezeigt.

Hierbei ist ein Bremsbelagträger 11 mit einer abzubremsenden Welle drehfest aber axial verschiebbar verbunden. Die Welle ist in einem Gehäuseteil gelagert, welches drehfest mit dem Spulenkörper 3 eines Elektromagneten verbunden ist.

Der Bremsbelagträger 11 weist eine Innenverzahnung auf, die im Eingriff steht mit einer auf der Welle angeordneten Außenverzahnung. Die Verzahnung erstreckt sich hierbei in axialer Richtung, so dass Bremsbelagträger 11 axial relativ zur Welle verschiebbar ist.

In einer Ringnut des Spulenkörpers 3 ist ein Spulenträger 6 aufgenommen, in welchem eine bestrombare Spule 7 aufgenommen ist. Die Ringachse der Ringnut ist koaxial zur Wellenachse ausgerichtet.

Der Bremsbelagträger 11 ist axial beidseitig mit Bremsbelägen 9 versehen. Axial zwischen dem Bremsbelagträger 11 und dem Spulenkörper 3 ist eine Ankerscheibe 8 angeordnet. Die Ankerscheibe 8 ist vorzugsweise aus einem ferromagnetischen Material. Die Ankerscheibe 8 ist mittels Führungselementen drehfest mit dem Spulenkörper 3 verbunden aber axial verschiebbar, wobei sie beim Verschieben von den Führungselementen geführt ist.

Zwischen Spulenkörper 3 und Ankerscheibe 8 sind Federelemente angeordnet. Somit ist ein Annähern der Ankerscheibe 8 zum Spulenkörper 3 hin nur entgegen der von den Federelementen erzeugten Kraft ausführbar.

Bei Bestromung der Spule 7 wird die Ankerscheibe 8 zum Spulenkörper 3 hin gezogen entgegen der von den Federelementen erzeugten Federkraft.

Bei Nichtbestromung der Spule 7 wird die Ankerscheibe 8 von den Federelementen axial zum den Bremsbelagträger 11 hin gedrückt, wobei dieser axial verschoben und auf ein eine Bremsfläche aufweisendes Teil 10 gedrückt wird, welches fest verbunden ist mit dem Spulenkörper 3.

Bei Nichtbestromung der Spule 7 wird also die Ankerscheibe 8 vom Spulenkörper 3 weggedrückt bis zu einer axialen Anschlagsposition. Dabei hängt die Anschlagsposition von der Dicke der Bremsbeläge ab. Je nach Verschleiß ist also die axiale Entfernung zwischen Ankerscheibe 8 und Spulenkörper 3 bei Nichtbestromung unterschiedlich.

Um den Verschleiß zu überwachen ist ein Sensor zur Detektion dieser Entfernung vorgesehen.

Der Sensor ist hierbei als Wirbelstromsensor ausgeführt.

Das Gehäuse des Sensors weist eine gestufte Außenkontur auf.

Im Spulenkörper 3 ist eine durchgehende Bohrung angeordnet, in welcher der Sensor aufgenommen ist. Dabei ist Bohrung ebenfalls gestuft ausgeführt und weist einen zur Ankerscheibe hin sich verjüngenden Querschnitt auf. Das Gehäuse 1 des Sensors liegt mit einer entsprechenden Stufe an der Stufe der Bohrung an und weist auf der von dieser Stufe und/oder auf der von der Ankerschiebe 8 abgewandten Seite eine Stufe 20 auf. Diese Stufe 20 führt von einem ersten Durchmesser zu einem zweiten Durchmesser, der kleiner ist als der erste Durchmesser. Der derart verjüngte axiale Endbereich ist auf dem von der Ankerscheibe 8 abgewandten Ende des Sensorgehäuses 1 angeordnet.

Das Sensorgehäuse 1 ist vorzugsweise als Rotationskörper ausgeführt.

Aus dem Sensorgehäuse 1 ist das Sensorkabel 5 mittig herausgeführt. Ein als Spiralfeder ausgeführtes Federteil 2 ist in der Bohrung aufgenommen und an der Stufe 20 des Sensorgehäuses 1 abgestützt. Das von der Ankerschiebe 8 abgewandte Ende der Bohrung ist von einer Kabelverschraubung 4 verschlossen, die auf das von der Stufe 20 abgewandte Ende des Federteils 2 drückt. Die Kabelverschraubung 4 ist schraubverbunden mit einem Innengewindebereich der Bohrung, also in die Bohrung eingeschraubt. Dabei erstreckt sich der Innengewindebereich nur über einen Endabschnitt der Bohrung und nicht über die gesamte Bohrung. Dieser Endabschnitt der Bohrung ist am von der Ankerscheibe 8 abgewandten Endbereich der Bohrung angeordnet.

Die Kabelverschraubung 4 ist vorzugsweise aus Metall ausgeführt.

Ebenso ist das Sensorgehäuse 1 und das Federteil 2 aus Metall ausgeführt.

Beim Einschrauben der Kabelverschraubung 4 in die Bohrung wird das Federteil 2 gespannt und drückt somit auf das Sensorgehäuse 1. Durch die so erzeugte Vorspannung ist das Sensorgehäuse 1 angedrückt an die Stufe der Bohrung.

Das Kabel 5 ist axial mittig durch das Federteil 2 und danach axial mittig durch eine Ausnehmung in der Kabelverschraubung 4 geführt.

Die Kabelverschraubung 4 weist eine sechskantförmige Schulter 21 auf, die das Einschrauben der Kabelverschraubung 4 begrenzt und außerdem zum formschlüssigen Ansetzen eines Maulschlüssels geeignet ist. Auf diese Weise ist ein einfaches Einschrauben der Kabelverschraubung 4 in den Gewindeabschnitt der Bohrung ausführbar.

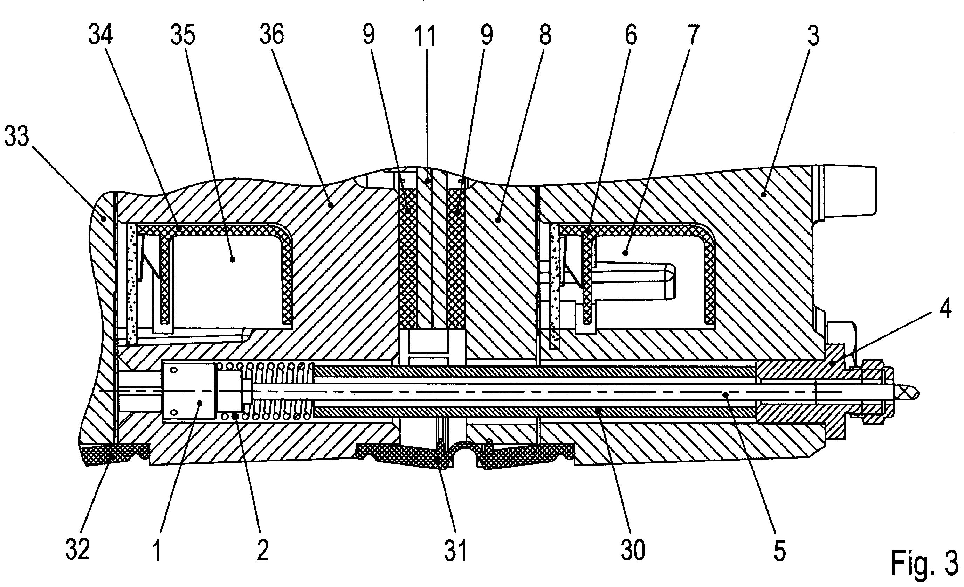

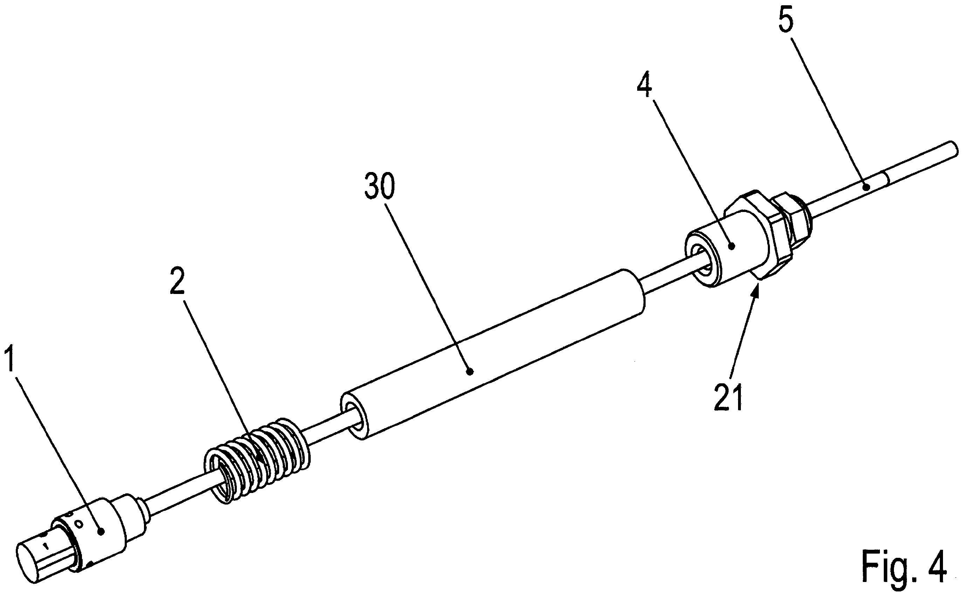

Im Unterschied zum Ausführungsbeispiel nach Figur 1 und 2 ist bei dem Ausführungsbeispiel nach Figur 3 und 4 zusätzlich eine Hülse 30 zur Beabstandung des Federteils 2 vom Sensorgehäuse 1 eingesetzt in die Bohrung.

Auf diese Weise ist der Sensor an einer weiter entfernten zweiten Bremse anbringbar, wobei die Hülse 30 eine erste Bremse überbrückt.

Wie in den Figuren 3 und 4 gezeigt, ist bei der erfindungsgemäßen Doppelbremse eine erste und eine zweite elektromagnetisch betätigbare Bremse vorgesehen.

Die erste Bremse ist entsprechend Figur 1 aufgebaut. Die zweite Bremse ist ähnlich aufgebaut, wobei das eine Gegenbremsfläche aufweisende Teil der zweiten Bremse kein Spulenkörper ist oder sein muss sondern beispielhaft als Lagerschild eines Elektromotors ausführbar ist.

Hierbei ist ein zweiter Spulenkörper 36 als dasjenige Teil 10 verwendet, welches eine Bremsfläche für den Bremsbelagträger 11 mit Bremsbelag 9 aufweist. Der zweite Spulenkörper 36 ist mit dem Spulenkörper 3 der ersten Bremse fest verbunden, insbesondere schraubverbunden.

Auch im zweiten Spulenkörper 36 ist wiederum eine Ringnut angeordnet, deren Ringachse koaxial zur Wellenachse ausgerichtet ist.

In der Ringnut des zweiten Spulenkörpers 36 ist wiederum ein Spulenträger 34 aufgenommen, welcher eine zweite Spule 35 aufnimmt.

Ein zweiter Bremsbelagträger 11 ist drehfest aber axial verschiebbar mit der Welle verbunden, die hierzu eine sich axial erstreckende Außenverzahnung aufweist, die mit einer Innenverzahnung des Bremsbelagträgers 11 im Eingriff steht. Eine Ankerscheibe 33 ist axial zwischen dem zweiten Bremsbelagträger und dem zweiten Spulenkörper 36 angeordnet und drehfest, aber axial verschiebbar mittels Führungselementen mit dem zweiten Spulenkörper 36 verbunden.

Zweite Federelemente sind zwischen der zweiten Ankerscheibe 33 und dem zweiten Spulenkörper 36 angeordnet, so dass bei Bestromung der zweiten Spule 35 die Ankerscheibe 33 entgegen der von den zweiten Federelementen erzeugten Federkraft zum Spulenkörper 36 hin gezogen wird. Bei Nichtbestromung der zweiten Spule 35 wird die zweite Ankerscheibe 33 axial vom zweiten Spulenkörper 36 weg gedrückt auf den zweiten Bremsbelagträger mit Bremsbelägen, der wiederum axial auf ein eine Gegenbremsfläche aufweisendes Teil gedrückt wird, das auf der von der Ankerscheibe 33 axial abgewandten Seite des zweiten Bremsbelagträgers angeordnet ist.

Ein Sensor zur Verschleißerkennung der Bremsbeläge der zweiten Bremse ist wiederum in einer Bohrung angeordnet, die axial durchgehend im Spulenkörper 36 angeordnet ist und gestuft ausgeführt ist, wobei der engere und/oder verjüngte Abschnitt der Bohrung auf der der zweiten Ankerscheibe 33 zugewandten Seite angeordnet ist und der Abschnitt mit dem größeren Querschnitt auf der von der zweiten Ankerscheibe 33 zugewandten Seite angeordnet ist.

Die Bohrung ist sozusagen fortgesetzt durch die Ankerscheibe 8 der ersten Bremse und durch den Spulenkörper 3 der ersten Bremse. Hierbei sind die Bohrungen in der Ankerscheibe 8 und dem Spulenkörper 3 koaxial ausgerichtet und mit mindestens demselben Querschnitt ausgeführt.

Somit ist ein Andrücken des Sensorgehäuses 1 an die Stufe der in den zweiten Spulenkörper 36 eingebrachten Bohrung ausgeführt, wobei eine entsprechende Stufe des Sensorgehäuses an die Stufe der in den zweiten Spulenkörper 36 eingebrachten Bohrung angestellt ist, insbesondere also angedrückt ist.

Auf die Stufe 20 des Sensorgehäuses 1 drückt wiederum das Federteil 2, welches aber an seinem von dem Sensorgehäuse 1 abgewandten axialen Ende abgestützt ist an einer Hülse30, die wiederum an ihrem vom Federteil 2 abgewandten axialen Ende abgestützt ist an der in den Gewindeabschnitt der in den Spulenkörper 3 eingeschraubten Kabelverschraubung 4.

Diese Kabelverschraubung liegt wiederum mit ihrer Schulter 21 am Spulenkörper 3 an.

Die Hülse 30 ist hohl ausgeführt. Mittig durch das Federteil 2 und die Hülse 30 ist somit das Kabel 5 geführt, so dass es ebenfalls mittig durch die Kabelverschraubung führbar ist und abgedichtet herausgeführt ist aus dem Innenraum der Bremsvorrichtung.

Die Bohrung und die Hülse 30 sind auf einem derart großen Radialabstand zur Wellenachse angeordnet, dass der Bremsbelagträger 11 samt Bremsbelägen 9 radial innerhalb der Bohrung und der Hülse 30 angeordnet ist. Der von der Hülse 30 überdeckte axiale Bereich überdeckt den von der Ankerscheibe 8 und den von dem Bremsbelagträger 11 samt Bremsbelägen 9 überdeckten axialen Bereich und überlappt mit dem von dem Spulenkörper 3 und mit dem von dem zweiten Spulenkörper 36 überdeckten axialen Bereich.

Der Spulenkörper 3 und der zweite Spulenkörper 36 sind mittels einer Abdeckung 31, insbesondere Gummiabdeckung, verbunden, so dass der axial zwischen Spulenkörper 3 und Spulenkörper 36 liegende Zwischenbereich gehäusebildend abgedeckt ist. Die Abdeckung 31 ist hierzu ringförmig ausgeführt und kraftschlüssig auf einen Teilbereich der Außenfläche des Spulenkörpers 3 und des Spulenkörpers 36 aufgesetzt.

Im Zwischenbereich befinden sich der Bremsbelagträger 11 samt Bremsbelägen 9 und die Ankerscheibe 8. Somit überdeckt der von der Abdeckung 31 axial überdeckte Beriech den von dem Bremsbelagträger 11 samt Bremsbelägen 9 überdeckten axialen Bereich und den von der Ankerscheibe 8 überdeckten axialen Bereich.

Außerdem ist die Abdeckung 31 von der Wellenachse aus gesehen radial außerhalb des Bremsbelagträgers 11 samt Bremsbelägen 9 und der Ankerscheibe 8 angeordnet.

Ebenso sind der Spulenkörper 36 und das die Gegenbremsfläche aufweisende Teil mittels einer Abdeckung 32, insbesondere Gummiabdeckung, verbunden, so dass der axial zwischen zweitem Spulenkörper 36 und dem die Gegenbremsfläche aufweisenden Teil liegende zweite Zwischenbereich gehäusebildend abgedeckt ist. Die Abdeckung 32 ist hierzu ringförmig ausgeführt und kraftschlüssig auf einen Teilbereich der Außenfläche des Spulenkörpers 36 und des die Gegenbremsfläche aufweisenden Teils aufgesetzt.

Im zweiten Zwischenbereich befinden sich der zweite Bremsbelagträger samt Bremsbelägen und die zweite Ankerscheibe 33. Somit überdeckt der von der Abdeckung 32 axial überdeckte Bereich den von dem zweiten Bremsbelagträger samt Bremsbelägen überdeckten axialen Bereich und den von der Ankerscheibe 33 überdeckten axialen Bereich.

Außerdem ist die Abdeckung 32 von der Wellenachse aus gesehen radial außerhalb des zweiten Bremsbelagträgers samt Bremsbelägen und der Ankerscheibe 33 angeordnet.

Vorzugsweise ist Abdeckung 31 gleichartig ausgeführt wie Abdeckung 32. Somit muss nur eine Sorte von Abdeckungen vorgehalten werden.

Die Hülse 30 ist auf größerem Radialabstand angeordnet als die Spule 7, der Spulenträger 6 und/oder die Ringnut im Spulenkörper 3 und/oder die Ringnut im Spulenkörper 36.

### Bezugszeichenliste

1 Sensorgehäuse, gestuft ausgeführt
2 Federteil
3 Spulenkörper
4 Kabelverschraubung
5 Kabel
6 Spulenträger
7 Spule, insbesondere Bremsspule
8 Ankerscheibe
9 Bremsbelag
10 Bremsfläche aufweisendes Teil
11 Bremsbelagträger
20 Stufe
21 Schulter
30 Hülse
31 Abdeckung, insbesondere Gummiabdeckung
32 Abdeckung, insbesondere Gummiabdeckung
33 weitere Ankerscheibe
34 weiterer Spulenträger
35 weitere Spule
36 weiterer Spulenkörper

## Patentansprüche

1. Elektromagnetisch betätigbare Bremsvorrichtung,
aufweisend
- einen Spulenkörper (3), insbesondere des Elektromagneten,
- eine mit dem Spulenkörper (3) drehfest verbundene, aber verschiebbare Ankerscheibe (8),
- einen Sensor mit Sensorgehäuse (1),
- ein Federteil (2) und
- eine Kabelverschraubung (4),
**wobei** der Spulenkörper (3) eine durchgehende gestuft ausgeführte Bohrung aufweist,
wobei das Sensorgehäuse (1) des Sensors gestuft ausgeführt ist,
wobei die Kabelverschraubung (4) an einem Ende der Bohrung angeordnet ist, insbesondere eingeschraubt ist in einen Gewindeabschnitt der Bohrung,
**dadurch gekennzeichnet, dass**
das Federteil (2) in der Bohrung angeordnet ist zwischen, insbesondere axial zwischen, Kabelverschraubung (4) und Sensorgehäuse (1),
wobei das Federteil (2) einerseits an einer Stufe (20) des Sensorgehäuses (1) abgestützt ist und andererseits an der Kabelverschraubung (4) abgestützt ist,
wobei das Sensorgehäuse (1) gegen eine Stufe (20) der Bohrung angedrückt ist, insbesondere vom Federteil (2).

2. Bremsvorrichtung nach Anspruch 1,
aufweisend
- einen zweiten Spulenkörper (36),
- eine mit dem zweiten Spulenkörper (36) drehfest verbundene, aber verschiebbare zweite Ankerscheibe (33),
**dadurch gekennzeichnet, dass**
der zweite Spulenkörper (3, 36) eine durchgehende Bohrung aufweist, wobei die beiden Bohrungen zueinander koaxial ausgerichtet sind, insbesondere also die beiden Bohrungen auf gleichem Radialabstand zu einer abzubremsenden Welle aufweisen und denselben Umfangswinkelbereich überdecken,
wobei die Bohrung im zweiten Spulenkörper (36) gestuft ausgeführt ist,
wobei die Kabelverschraubung (4) an dem vom zweiten Spulenkörper (36) abgewandten Ende der Bohrung im ersten Spulenkörper (3) angeordnet ist, insbesondere eingeschraubt ist in einen Gewindeabschnitt der Bohrung,
wobei das Federteil (2) in der zweiten Bohrung angeordnet ist zwischen Kabelverschraubung (4) und Sensorgehäuse (1),
wobei das Federteil (2) einerseits an einer Stufe (20) des Sensorgehäuses (1) abgestützt ist und andererseits an einer Hülse (30), welche an ihrem vom Federteil (2) abgewandten Ende die Kabelverschraubung (4) berührt.

3. Bremsvorrichtung nach Anspruch 2,
**dadurch gekennzeichnet, dass**
der von der Hülse (30) überdeckte axiale Bereich überlappt mit dem vom ersten und mit dem vom zweiten Spulenkörper (36) überdeckten axialen Bereich.

4. Bremsvorrichtung nach einem der Ansprüche 2 bis 3,
**dadurch gekennzeichnet, dass**
die Hülse (30) durch eine durchgehende Bohrung der ersten Ankerscheibe (8) hindurchragt.

5. Bremsvorrichtung nach einem der Ansprüche 2 bis 4,
**dadurch gekennzeichnet, dass**
die Hülse (30) auf einem größeren Radialabstand zur Achse der abzubremsenden Welle angeordnet ist als ein mit der abzubremsenden Welle drehfest aber axial verschiebbar verbundene Bremsbelagträger (11).

6. Bremsvorrichtung nach einem der Ansprüche 2 bis 5,
**dadurch gekennzeichnet, dass**
eine Abdeckung (31) mit dem ersten und mit dem zweiten Spulenkörper (3, 36) verbunden ist, so dass der Zwischenbereich zwischen erstem und zweitem Spulenkörper (3, 36) gehäusebildend umgeben ist,
insbesondere wobei im Zwischenbereich die erste Ankerscheibe (8) angeordnet ist.

7. Bremsvorrichtung nach einem der Ansprüche 2 bis 6,
**dadurch gekennzeichnet, dass**
eine zweite Abdeckung (32) mit dem zweiten Spulenkörper (36) und dem eine Gegenbremsfläche aufweisenden Teil verbunden ist, so dass der Zwischenbereich zwischen dem Teil und dem zweiten Spulenkörper (36) gehäusebildend umgeben ist,
insbesondere wobei im Zwischenbereich die zweite Ankerscheibe (33) angeordnet ist.

8. Bremsvorrichtung nach einem der Ansprüche 2 bis 7,
**dadurch gekennzeichnet, dass**
die erste und/oder die zweite Abdeckung (31, 32) aus elastischerem Material als die Spulenkörper (3, 36) ausgeführt ist oder sind, insbesondere aus Kunststoff oder Gummi.

9. Bremsvorrichtung nach mindestens einem der vorangegangenen Ansprüche,
**dadurch gekennzeichnet, dass**
der Sensor und die Bohrung auf größerem Radialabstand von der Achse der abzubremsenden Welle angeordnet sind als eine Spule (7) des Elektromagneten, insbesondere also der elektromagnetisch betätigbaren Bremsvorrichtung.

10. Bremsvorrichtung nach mindestens einem der vorangegangenen Ansprüche,
**dadurch gekennzeichnet, dass**
die Bohrung von der Ankerscheibe (8) abdeckbar ist, insbesondere bei Anliegen der Ankerscheibe (8) am Spulenkörper (3, 36).

11. Bremsvorrichtung nach mindestens einem der vorangegangenen Ansprüche,
**dadurch gekennzeichnet, dass**
der von der Ankerscheibe (8) überdeckte Umfangswinkelbereich den von der Bohrung überdeckten Umfangswinkelbereich überdeckt und
der von der Ankerscheibe (8) überdeckte Radialabstandbereich den von der Bohrung überdeckten Radialabstandbereich überdeckt,
insbesondere wobei im Zwischenbereich zwischen Ankerscheibe (8) und Sensor kein Teil angeordnet ist.

12. Bremsvorrichtung nach mindestens einem der vorangegangenen Ansprüche,
**dadurch gekennzeichnet, dass**
ein Kabel (5) vom Sensor mittig durch das Federteil (2) und mittig durch die Kabelverschraubung (4) geführt ist.

13. Bremsvorrichtung nach mindestens einem der vorangegangenen Ansprüche,
**dadurch gekennzeichnet, dass**
der Sensor ein Wirbelstromsensor ist, insbesondere zur Erfassung der Entfernung zwischen Ankerscheibe (8) und Wirbelstromsensor.

## Claims

1. An electromagnetically actuatable braking device,
having
- a coil form (3), in particular of the electromagnet,
- an armature disc (8) which is connected to the coil form (3) in rotation-resistant manner, but is displaceable,
- a sensor with sensor housing (1),
- a spring part (2), and
- a cable gland (4),
wherein the coil form (3) has a continuous stepped bore,
wherein the sensor housing (1) of the sensor is stepped,
wherein the cable gland (4) is arranged at one end of the bore, in particular is screwed into a threaded portion of the bore,
**characterised in that**
the spring part (2) is arranged in the bore between, in particular axially between, the cable gland (4) and sensor housing (1),
wherein the spring part (2) on one hand is supported on a step (20) of the sensor housing (1) and on the other hand is supported on the cable gland (4),
wherein the sensor housing (1) is pressed against a step (20) of the bore, in particular by the spring part (2).

2. A braking device according to Claim 1,
having
- a second coil form (36),
- a second armature disc (33) which is connected to the second coil form (36) in rotation-resistant manner, but is displaceable,
**characterised in that**
the second coil form (3, 36) has a continuous bore, wherein the two bores are oriented coaxially with each other, in particular therefore the two bores are at the same radial spacing from a shaft which is to be braked and cover the same angle-at-circumference region,
wherein the bore in the second coil form (36) is stepped,
wherein the cable gland (4) is arranged at that end of the bore in the first coil form (3) which is remote from the second coil form (36), in particular is screwed into a threaded portion of the bore,
wherein the spring part (2) is arranged in the second bore between the cable gland (4) and sensor housing (1),
wherein the spring part (2) is supported on one hand on a step (20) of the sensor housing (1) and on the other hand on a sleeve (30) which at its end remote from the spring part (2) contacts the cable gland (4).

3. A braking device according to Claim 2,
**characterised in that**
the axial region covered by the sleeve (30) overlaps with the axial region with the axial region covered by the first and with the axial region covered by the second coil form (36).

4. A braking device according to one of Claims 2 to 3,
**characterised in that**
the sleeve (30) protrudes through a continuous bore of the first armature disc (8).

5. A braking device according to one of Claims 2 to 4,
**characterised in that**
the sleeve (30) is arranged at a greater radial spacing from the axis of the shaft which is to be braked than a brake lining carrier (11) connected in rotation-resistant manner but axially displaceably to the shaft which is to be braked.

6. A braking device according to one of Claims 2 to 5,
**characterised in that**
a covering (31) is connected to the first and to the second coil form (3, 36), so that the intermediate region between the first and second coil form (3, 36) is surrounded in housing-forming manner,
in particular with the first armature disc (8) being arranged in the intermediate region.

7. A braking device according to one of Claims 2 to 6,
**characterised in that**
a second covering (32) is connected to the second coil form (36) and the part having a counter-braking surface, so that the intermediate region between the part and the second coil form (36) is surrounded in housing-forming manner,
in particular with the second armature disc (33) being arranged in the intermediate region.

8. A braking device according to one of Claims 2 to 7,
**characterised in that**
the first and/or the second covering (31, 32) is or are made of a more elastic material than the coil forms (3, 36), in particular of plastics material or rubber.

9. A braking device according to at least one of the preceding claims,
**characterised in that**
the sensor and the bore are arranged at a greater radial spacing from the axis of the shaft which is to be braked than a coil (7) of the electromagnet, in particular therefore of the electromagnetically actuatable braking device.

10. A braking device according to at least one of the preceding claims,
**characterised in that**
the bore can be covered by the armature disc (8), in particular when the armature disc (8) is lying against the coil form (3, 36).

11. A braking device according to at least one of the preceding claims,
**characterised in that**
the angle-at-circumference region covered by the armature disc (8) covers the angle-at-circumference region covered by the bore, and
the radial spacing region covered by the armature disc (8) covers the radial spacing region covered by the bore,
in particular wherein no part is arranged in the intermediate region between the armature disc (8) and sensor.

12. A braking device according to at least one of the preceding claims,
**characterised in that**
a cable (5) is guided from the sensor centrally through the spring part (2) and centrally through the cable gland (4).

13. A braking device according to at least one of the preceding claims,
**characterised in that**
the sensor is an eddy-current sensor, in particular for detecting the distance between the armature disc (8) and eddy-current sensor.

## Revendications

1. Dispositif de freinage à commande électromagnétique, présentant
- une carcasse de bobine (3), en particulier de l'électroaimant,
- un disque d'induit (8) lié en rotation à la carcasse de bobine (3) mais mobile en translation,
- un capteur avec un boîtier de capteur (1),
- un élément formant ressort (2) et
- un passe-câble à vis (4),
sachant que la carcasse de bobine (3) présente un alésage traversant réalisé à gradins, sachant que le boîtier de capteur (1) du capteur est réalisé à gradins,
sachant que le passe-câble à vis (4) est disposé à une extrémité de l'alésage, en particulier est vissé dans une partie filetée de l'alésage,
**caractérisé en ce que** l'élément formant ressort (2) est disposé dans l'alésage entre, en particulier axialement entre, le passe-câble à vis (4) et le boîtier de capteur (1),
sachant que l'élément formant ressort (2) est appuyé d'une part sur un gradin (20) du boîtier de capteur (1) et d'autre part sur le passe-câble à vis (4),
sachant que le boîtier de capteur (1) est pressé contre un gradin (20) de l'alésage, en particulier par l'élément formant ressort (2).

2. Dispositif de freinage selon la revendication 1,
présentant
- une deuxième carcasse de bobine (36),
- un deuxième disque d'induit (33) lié en rotation à la deuxième carcasse de bobine (36) mais mobile en translation,
**caractérisé en ce que** la deuxième carcasse de bobine (3,36) présente un alésage traversant, sachant que les deux alésages sont orientés coaxialement entre eux, en particulier donc que les deux alésages présentent une même distance radiale par rapport à un arbre à freiner et couvrent la même plage d'angle inscrit,
sachant que l'alésage dans la deuxième carcasse de bobine (36) est réalisé à gradins, sachant que le passe-câble à vis (4) est disposé à l'extrémité de l'alésage dans la première carcasse de bobine (3) qui est éloignée de la deuxième carcasse de bobine (36), en particulier est vissé dans une partie filetée de l'alésage,
sachant que l'élément formant ressort (2) est disposé dans le deuxième alésage entre le passe-câble à vis (4) et le boîtier de capteur (1),
sachant que l'élément formant ressort (2) est appuyé d'une part sur un gradin (20) du boîtier de capteur (1) et d'autre part sur un manchon (30) qui, à son extrémité éloignée de l'élément formant ressort (2), vient en contact avec le passe-câble à vis (4).

3. Dispositif de freinage selon la revendication 2, **caractérisé en ce que** la plage axiale couverte par le manchon (30) se chevauche avec la plage axiale couverte par la première et par la deuxième carcasse de bobine (36).

4. Dispositif de freinage selon l'une des revendications 2 à 3, **caractérisé en ce que** le manchon (30) passe à travers un alésage traversant du premier disque d'induit (8).

5. Dispositif de freinage selon l'une des revendications 2 à 4, **caractérisé en ce que** le manchon (30) est disposé à une plus grande distance radiale de l'axe de l'arbre à freiner qu'un support (11) de garniture de frein lié en rotation à l'arbre à freiner mais mobile en translation.

6. Dispositif de freinage selon l'une des revendications 2 à 5, **caractérisé en ce qu'**un élément de recouvrement (31) est relié à la première et à la deuxième carcasse de bobine (3, 36), de sorte que la région intermédiaire entre la première et la deuxième carcasse de bobine (3, 36) est entourée en formant en boîtier,
sachant en particulier que le premier disque d'induit (8) est disposé dans la région intermédiaire.

7. Dispositif de freinage selon l'une des revendications 2 à 6, **caractérisé en ce qu'**un deuxième élément de recouvrement (32) est relié à la deuxième carcasse de bobine (36) et à l'élément présentant une contre-surface de freinage, de sorte que la région intermédiaire entre l'élément et la deuxième carcasse de bobine (36) est entourée en formant en boîtier,
sachant en particulier que le deuxième disque d'induit (33) est disposé dans la région intermédiaire.

8. Dispositif de freinage selon l'une des revendications 2 à 7, **caractérisé en ce que** le premier et/ou le deuxième élément de recouvrement (31, 32) est ou sont réalisés en un matériau plus élastique que les carcasses de bobine (3, 36), en particulier en matière plastique ou en caoutchouc.

9. Dispositif de freinage selon au moins une des revendications précédentes, **caractérisé en ce que** le capteur et l'alésage sont disposés à une plus grande distance radiale de l'axe de l'arbre à freiner qu'une bobine (7) de l'électroaimant, en particulier donc du dispositif de freinage à commande électromagnétique.

10. Dispositif de freinage selon au moins une des revendications précédentes, **caractérisé en ce que** l'alésage peut être recouvert par le disque d'induit (8), en particulier lors de l'application du disque d'induit (8) sur la carcasse de bobine (3, 36).

11. Dispositif de freinage selon au moins une des revendications précédentes, **caractérisé en ce que** la plage d'angle inscrit couverte par le disque d'induit (8) couvre la plage d'angle inscrit couverte par l'alésage, et
la plage de distance radiale couverte par le disque d'induit (8) couvre la plage de distance radiale couverte par l'alésage,
sachant en particulier qu'il n'y a pas d'élément disposé dans la région intermédiaire entre le disque d'induit (8) et le capteur.

12. Dispositif de freinage selon au moins une des revendications précédentes, **caractérisé en ce qu'**un câble (5) est dirigé depuis le capteur centralement à travers l'élément formant ressort (2) et centralement à travers le passe-câble à vis (4).

13. Dispositif de freinage selon au moins une des revendications précédentes, **caractérisé en ce que** le capteur est un capteur à courants de Foucault, destiné en particulier à déterminer l'éloignement entre le disque d'induit (8) et le capteur à courants de Foucault.
